**Europäisches Patentamt**

**European Patent Office**

**Office européen des brevets**

(19)

(11) Veröffentlichungsnummer : **0 340 227 B1**

(12) # EUROPÄISCHE PATENTSCHRIFT

(45) Veröffentlichungstag der Patentschrift :
30.10.91 Patentblatt 91/44

(51) Int. Cl.$^5$ : **A22C 17/04**

(21) Anmeldenummer : **88900443.8**

(22) Anmeldetag : **30.12.87**

(86) Internationale Anmeldenummer :
**PCT/AT87/00079**

(87) Internationale Veröffentlichungsnummer :
**WO 88/04893 14.07.88 Gazette 88/15**

(54) **VORRICHTUNG ZUM ABTRENNEN DES AN KNOCHEN ANHAFTENDEN FLEISCHES.**

(30) Priorität : **02.01.87 AT 4/87**

(43) Veröffentlichungstag der Anmeldung :
**08.11.89 Patentblatt 89/45**

(45) Bekanntmachung des Hinweises auf die
Patenterteilung :
**30.10.91 Patentblatt 91/44**

(84) Benannte Vertragsstaaten :
**BE CH DE FR GB IT LI LU NL SE**

(56) Entgegenhaltungen :
**EP-A- 0 072 365**
**AT-B- 380 154**
**FR-A- 2 289 409**
**GB-A- 413 567**
**US-A- 1 861 391**
**US-A- 3 550 775**
**US-A- 4 025 985**

(73) Patentinhaber : **INJECT STAR
PÖKELMASCHINEN GESELLSCHAFT M.B.H.
Innstrasse 23
A-1201 Wien (AT)**

(72) Erfinder : **PROSENBAUER, Otto
Innstra e 23
A-1201 Wien (AT)**

(74) Vertreter : **Brauneiss, Leo et al
Patentanwälte Dipl.-Ing. Leo Brauneiss,
Dipl.-Ing. Dr. Helmut Wildhack Landstrasser
Hauptstrasse 50 Postfach 281
A-1031 Wien (AT)**

Jouve, 18, rue Saint-Denis, 75001 PARIS

## Beschreibung

Die Erfindung bezieht sich auf eine vorrichtung zum Abtrennen des en Knochen anhaftenden Fleisches von diesen Knochen durch Verpressen der fleischbehafteten Knochen, mit einem ein einem Gestell angeordneten, gegen ein Widerlager in dichtende Anlage anhebbaren Preßraum mit vertikeler Achse, in den von unten ein Preßkolben einführbar ist und der an seinem oberen Ende durch des Widerlager für die Verpressung verschließbar ist, das zwischen einer über dem Preßraum liegenden Schließstellung und einer den Preßraum freigebenden Stellung um eine vertikale Achse verschwenkbar ist und an seinem dem Preßraum zugewendeten Boden einen Fortsatz trägt, der bei der Anhebung des Preßraumes in diesen oben dichtend eintritt, wobei die Wand des Preßraumes Öffnungen für den Durchgang der durch den Preßdruck in pastenartigen Zustand überbeführten Fleischmasse hat, für die Knochen jedoch undurchlässig ist, und seitlich an das obere Ende des Preßraumes eine im wesentlichen horizontale Auflagefläch für die in den Preßraum einzuschiebenden fleischbehaftenden Knochen anschließt und oberhalb des Preßraumes ein horizontales Querstück vorgesehen ist, welches während des Preßvorganges den Preßdruck aufnimmt und hiebei an zwei Säulen des Gestelles verankert ist.

Vorrichtungen der eingangs geschilderten Art sind bekannt (AT-B-380 154). Damit lassen sich fleischbehaftete Knochen mit geringem Aufwand zur Gewinnung von Restfleisch verpressen, das im pastenartigen Zustand durch die Öffnungen der Preßraumwand hindurchtritt und aufgefangen wird, wogegen nach Beendigung des Preßvorganges die verpreßte Knochenmasse nach Ausschwenkung des Widerlagers nach oben aus dem Preßraum augeschoben und abgeführt wird. Das Widerlager besteht bei der bekannten Konstruction aus einem unten geschlossenen Rohrstück, das in seiner den Preßraum abschließenden Stellung gleichsam eine Verlängerung der Preßraumwand bildet und in dieser Stellung mit seinem oberen Ende unter das ortsfeste Querstück geschoben ist, wobei die beiden Säulen die vom Preßdruck ausgeübte Belastung in das Gestell ableiten. Dieses Rohrstück ist an seinem Boden mit einer stufenförmigen Absetzung versehen, die in den Preßraum passend eintritt und in die ein O-Ring zur Verbesserung der Abdichtung eingelassen ist. Nachteilig hieran ist, daß eine auch nur geringe Abweichung des Widerlagers von seiner Soll-Lage, in welcher seine Achse mit jener des Preßraumes koaxial liegt, eine Beschädigung des Widerlagers oder der Preßraumwand oder aber einen Betriebsstillstand zur Folge hat. Solche Abweichungen kommen aber in der Praxis immer wieder vor Besonders kritisch sind geringe Abweichnungen, die, insbesondere wern sie wiederholt auftreten, eine Beeinträchtigung der Dichtung am oberen Preßraumende zur Folge haben.

Die Erfindung setzt sich zur Aufgabe, eine Vorrichtung der eingangs geschilderten Art noch weiter zu vereinfachen, zu verbilligen und hinsichtlich der Sicherheit der Abdichtung am oberen Stimende des Preßraumes zu verbessern. Die Erfindung löst diese Aufgabe dadurch, daß das Widerlager mit dem Querstück und dem Fortsatz zu einem gemeinsam um die von einen Säule gebildete vertikale Achse verschwenkbaren einstückigen Bauteil vereint ist, die zugleich das Widerlager bildet. Während bei der eingangs geschilderten bekannten Konstruktion zur Einleitung des Preßdruckes in das Gestell zwei voneinander getrennte Bauteile, nämlich das eigentliche Widerlager und das Querstück, erforderlich sind, sind beim Erfindungsgegenstand diese beiden Bauteile zu einem gemeinsamen Bauteil vereint und gemeinsam um die vertikale Achse verschwenkbar. Dies setzt voraus, daß das Querstück von der einen Säule lösbar, jedoch an dieser nach wie vor sicher verankerbar ist, um den Preßdruck in das Gestell ableiten zu können. Die Erfindung hat auch den Vorteil, daß infolge der verinfachten Bauweise Tolenranzen ausgeschaltet sind, die bei der eingangs geschilderten bekannten Konstruktion an der Anlagefläche des Widerlagers am Querstück kritisch sind. Auch die Bedienung wird vereinfacht, da sich der vom Querstück und vom Widerlager gebildete gemeinsame Bauteil leichter handhaben läßt als das bei der eingangs beschriebenen bekannten Konstruktion unter das Querstück einzuschiebende gesonderte Widerlager. Zudem bildet der konische Fortsatz eine automatische Zentrierung des Widerlagers in Bezug auf den Preßraum bei Einleitung des Preßdruckes, so daß eine einwandfreie Abdichtung am oberen Ende des Preßraumes erziehlt wird, auch wenn bei der Verschwenkung des Widerlagers dieses nicht genau in seine Sollstellung gebracht wurde.

Aus der US-A 861 391 ist zwar ein um eine vertikale Säule verschwekbares Querstück bekannt, welches zugleich das Widerlager für die Verpressung bildet, jedoch erfolgt die Ditchtung zwischen Preßraum und Querstück durch eine gesonderte Dichplatte, die in das obere Ende des Preßraumes nach Einfüllen der zu verpressenden Masse eingelegt werden muß. Diese gesonderte Dischtplatte ist hinsichtlich der Dichtfunktion und vor allem hinsichtlich der Handlichkeit wesentlich ungünsiger zu beurteilen als die erfindungsgemäße Konstruktion, abgeshen davon, daß die Dichtplatte in keiner Weise zu einer Zentrierung des Widerlagers beitragen kann. Aus dieser Veröffentlichung läßt sich daher keine Anregung auf die Erfindung ableiten.

Gemäß einer Weiterbildung der Erfindung ist das Querstück an seinem der vertikalen. Achse abgewendeten Ende zu einem Haken geformt und umgreift mit diesem Haken eine Ausnehmung der anderen, nicht die Schwenkachse bildenden Säule in der den Preßdruck aufnehmenden Stellun. Dadurch ergibt sich während des Preßvorganges eine sichere Verankerung des Querstückes an der Säule, so daß die auftretenden Beanspruchungen verläßlich aufgenommen werden. Zweckmäßig ist hiebei das der Schenkachse abgewendete Ende des Querstückes an seiner Säule in seiner den Preßdruck aufnehmenden Stellung verriegelbar. Das Qierstück kann an seinem der Schwenkachse abgewendeten Ende mit einem Hangriff versehen sein, um die Bedienung zu erleichtern.

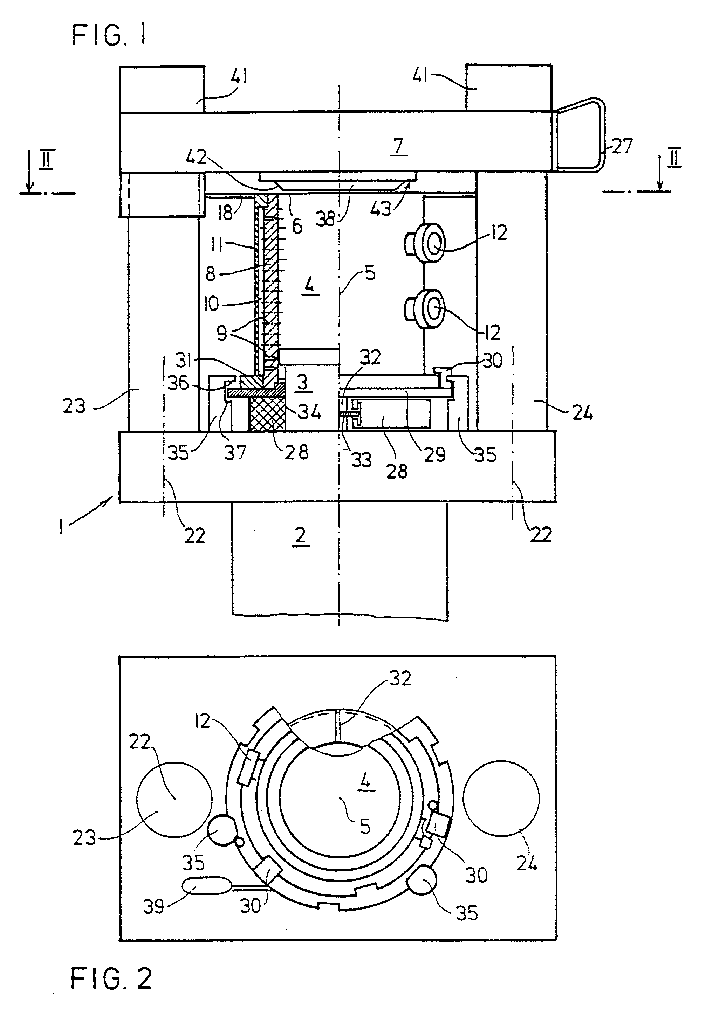

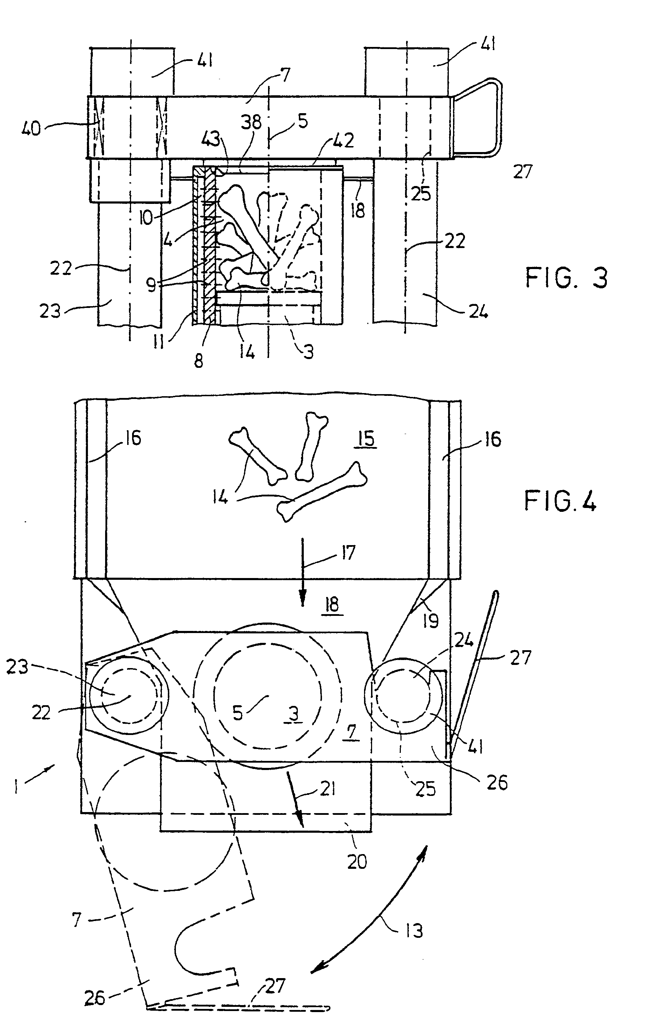

In der Zeichnung ist der Erfindungsgegenstand an Hand eines Ausführungsbeispieles schematish dargestellt. Fig.1 zeigt die wesentlichen Teile der Vorrichtung bei abgesenkter Preßraumwand und bei in der Verschlußstellung befindlichen Lage des Querstückes in Seitenansicht, teilweise im Schnitt. Fig.2 ist ein Schnitt nach der Linie II-II der Fig.1, wobei einige Teile abgebrochen dargestellt sind. Fig.3 zeigt eine ähnlide Ansicht wie Fig.1, teilweise im Schnitt, jedoch bei an das Querstück angehobener Preßraumwand. Fig.4 zeigt in Draufsicht die Verschwenkungs- möglichkeit für das Querstück.

Die Vorrichtung hat ein Gestell 1, in welchem ein hydraulischer Zylinder 2 starr befestigt ist. Aus diesem Zylinder 2 ist ein Preßkolben 3 ausfahrbar, der in einen mit stehender Achse 5 im Gestell angeordneten Preßraum 4 einfahrbar ist. Der mit kreiszylindrischem Querschnitt ausgebildete Preßraum 4 ist an seinem oberen Stirnende 6 durch ein von einem Querstück 7 gebildetes Widerlager für die Verpressung verschießbar. Die rohrförmige Wand 8 des Preßraumes 4 hat eine Vielzahl von Öffnungen 9 in Loch- oder Schlitzform, durch welche Öffnungen das durch den Preßdruck in pastenartigen Zustand übergeführte Fleisch hindurchtreten kann. Für die Knochen sind diese Öffnungen 9 jedoch unpassierbar. Die Wand 8 bildet daher mit ihren Öffnungen 9 ein Filter zur Abtrennungder Fleischmasse von den Knochen. Die durch die Öffungen 9 hindurchtretende Fleischmasse gelangt in einen die Wand 8 umgebenden Ringraum 10, der auße, von einer Mantelrohr 11 begrenzt wird. In diesem Ringraum 10 kann sich die Fleischmasse sammeln, die sodann durch mehrere radiale Auslässe 12 austritt, an welche nicht dargestellte Schläuche angeschlossen sein können, die zu einer Auffangwanne führen. Die Wand 8 des Preßraumes 4 ist begrenzt höhenverlagerbar, und zwar zwischen einer in Fig. 1 dargestellten unteren Grenzlage und einer in Fig.3 dargestellten obersten Grenslage. In der untersten Grenzlage (Fig.1) ist die Wand 8 so weit abgesenkt, daß ihr oberes Stirnende 6 tiefer liegt als das Querstück 7, von diesem also in einem derartigen Abstand liegt, daß das Querstück 7 in Richtung des Doppelpfeiles 13 (Fig.4) ausgeschwenkt werden kann, um die zu verpressenden Knochen 14 (Fig.3) in den Preßraum 4 von oben her einbrigen zu können.

Zweckmäßig ist hiezu im Anschluß an das in dieser Lage befindliche Stirnende 6 des Preßraumes 4 eine horizontale oder geringfügig gegen den Preßraum zu geneigte Auflagefläche 15 (Fig.4) für die zu verpressenden Knochen vorgesehen, die in Form einer seichten Wanne von einem Randwulst 16 begrenzt sein kann, damit die Knochen nicht unbeabsichtigt herunterfallen können. Auf dieser Auflagefläche 15 lassen sich die Knochen in Richtung des Pfeiles 17 (Fig.4) leicht von Hand gegen den Preßraum 4 schieben. Zweckmäßig schließt an die Auflagefläche 15 ein den Preßraum 4 umgebendes Übergangsblech 18 an, welches aufgebogene Ränder 19 haben kann, welche die Knochen gegen den Preßraum 4 leiten. An dem der Auflagefläche 15 gegenüberliegenden Rand kann dieses Übergangsblech 18 mit einer Rusche 20 versehen sein, über welche die verpreßte Restmasse nach ihrer Ausschiebung aus dem Preßraum 4 in Richtung des Pfeiles 21 abgeführt werden kann. z.B. in einen Auffangbehälter.

Das das Widerlager bildente horizontale Querstück 7 ist um eine vertikale Achse 22 verschwenkbar, die von der Symmetrieachse einer Säule 23 gebildet ist, an der das Querstück 7 mittels eines Lagers 40 in einer horizontalebene schwenkbar gelagert ist. Eine gleichartige Säule 24 ist an der anderen Seite der Vorrichtung vorgesehen und hat eine Ausnehmung 25, die in der wirksamen Stellung des Querstückes 7 von dessen als Haken 26 ausgebildeten freien Ende umgriffen wird. Dieser Haken 26 ist mit einem Handgriff 27 versehen, der zugleich als Verriegelungsorgan zur Blockierung des Querstückes 7 in seiner in Fig.4 mit Vollen Linien gezeichneten Verschlußstellung dienen kann. Aus dieser Stellung läßt sich das Querstück 7 in die strichliert gezeichnete unwirksame Stellung ausschwenken und aus letzterer Stellung wieder zurückschwenken. In der mit vollen Linien gezeichneten Verschlußstellung des Querstückes 7 nehmen die Säulen 23,24 bei der Verpressung den Preßdruck auf und sind entsprechend stark bemessen. Um zu verhindern, daß das Querstück 7 von den Säulen 23, 24 nach oben durch den Preßdruck abgezogen werden kann, sind die beiden Säulen 23,24 mit verbreiterten Köpfen 41 versehen.

Zur erwähnten Anhebung bzw.Absenkung der Wand 8 des Preßraumes 4 dient ein Mitnahmering 28 aus Kunstoff, der an einer Lochplatte 29 anliegt, die mit der Wand 8 bzw.dem Mantelrohr 11 fest verbungen ist. Hiezu sind an der Lochplatte 29 mehrere, über ihren Umfang verteilte Klemmstücke 30 angeschraubt, die einen Flansch 31 des unteren Stirnendes des Mantelrohres 11 übergreifen. Der Mitnahmering 28 is durch einen radialen Schlitz 32 völlig durchtrennt und die beiden einander benachbarten Ring- enden sind durch eine Spannschraube 33 (Fig.1) zuzammengehalten. Durch Verstellung dieser Spannschraube 33 läßt sich die Reibung, mit wel-cher der Mitnahmering 28 und der Wand 34 des Preßkolbens anliegt, nach Wunsch einstellen. Zur lechteren Betätigung ist die Spannschraube 33 mit einem seitlich vom Mantelrohr 11 abstehenden Handgriff 39 versehen.

Entlang des Außenumfanges des Lochplatte 29 sind mehrere Anschlagträger 35 ortsgest angeordnet, deren jeder zwei in Bewegungsrichtung der Lochplatte 29 in Abstand voneinander liegende Anschläge 36,37 trägt, deren einer (36) oberhalb der Lochplatte 29 liegt, wogegen der andere (37) unterhalb der Lochplatte 29 angeordnet ist. Der Abstant jedes Paares der Anschläge 36,37 ist zumindest so groß wie die Hublänge der Wand 8 des Preßraumes 4, vorzugsweise geringfügig größer. Diese Anschläge 36,37 bilden Begrenzungen für die Bewegung der Wand 8.

Im Betrieb der Vorrichtung wird bei völlig abgesenkter Wand 8 des Preßraumes 4 das Querstück 7 in Richtung von der Auflagefläche 15 bzw.vom Übergangsblech 18 weg in die in Fig.4 strichliert dargestellte unwirksame Stellung ausgeschwenkt. In die so freigelegte obere Öffnung des Preßraumes 4 können dann die zu verpressenden fleischbehafteten Knochen 14 in Richtung des Pfeiles 17 (Fig.4) von der Auflagefläche 15 über das Übergangsblech 18 (Fig.4) eingeschoben werden, ohne daß dies durch das Querstück 7 behindert wird. Sobald der Preßraum 4 genügend gefüllt ist, wird das Querstück 7 um die Achse 22 zurückgeschwenkt, bis es in die in Fig.4 voll eingezeichnete wirksame Stellung gelangt. Nach Verriegelung in dieser Lage mittels des Handgriffes 27 wird die hydraulische Steuerung so betätigt, daß der Preßkolben 3 im Zylinder 2 angehoben wird. Durch den reibungsschlüssig mit ihm verbundenen Mitnahmering 23 werden hiebei auch die Lochplatte 29, die Preßraumwand 8 und das Mantelrohr 11 nach oben mitgenommen, bis das obere Stirnende 6 der Preßraumwand 8 am Querstück 7 dichtend anliegt. Zu Zentrierzwecken ist dieses Querstück 7 mit einem das eigentliche Widerlager 43 bei der Verpressung bildenten Forzatz 38 einstückig augebildet, der eine konische Mantelfläche 42 hat und bei der Anhebung des Preßraumes 4 in dessen oberes Ende eintritt. Sobald das obere Stirnende 6 der Preßraumwand 8 derart abgedichtet am Querstück 7 anliegt, ist der Preßraum 4 nach oben dicht abgeschlossen und eine weitere Verschiebung der Preßraumwand 8 nach oben kann nicht stattfinden, da das an den Säulen 23,24 gegen Verschiebung nach oben gesicherte Querstück 7 dies verhindert. Bei der weiteren Bewegung des Preßkolbens 3 nach oben bleibt daher der Mitnahmering 28 stehen und es beginnt die Verpressung der Knochen 14, wobei die Fleischmasse durch die Öffnungen 9 in den Ringraum 10 gedrück wird und aus diesem durch die Auslässe 12 austritt. Sobald die Knochen 14 genügend verpreßt sind, wird der Zylinder 2 umgesteuert, so daß der Preßkolben 3 nach unten bewegt wird. Am beginn dieser Abwärtsbewegung nimmt der Preßkolben 3 über den Mitnahmering 28 die Preßraumwand 8 zusammen mit der Lochplatte 29 und dem Mantelrohr 11 nach unten mit, bis die Lochplatte 29 am unteren Anschlag 37 anstößt. Der Preßkolben 3 wird sodann noch etwas zurückgezogen, wobei die Wand 8 stehenbleibt. Sodann kann nach Lösen der Verriegelung das Querstück 7 wieder in die in Fig.4 strichliert dargestellte unwirksame Stellung ausgeschwenkt werden. Sobald dies erfolgt ist, wird des Preßkolben 3 durch entsprechende Ansteuerung des Zylinders 2 neuerlich angehoben, wobei er am Beginn dieser Anhebebewegung die Wand 8 nach oben mitnimmt, bis die Lochplatte 29 am oberen Anschlag 36 anschlägt. Sobald dies der Fall ist, verschiebt sich der Preßkolben 3 relativ zur Wand 8 nach oben und schiebt die von den verpreßten Knochen 14 gebildete Rückstandsmasse aus dem Stirnende 6 des Preßraumes 4 nach oben aus, von wo diese Masse über die Rutsche 20 abgeführt wird. Sodann wird der Preßkolben 3 wieder zurückgezogen und nimmt hiebei die Wand 8 in die untere Ausgangsstellung mit. Sobald der Preßkolben 3 seine unterste Lage erreicht hat, ist der Arbeitszyklus vollendet und der Preßraum 4 kann neuerlich mit zu verpressenden Knochen 14 gefüllt werden.

## Patentansprüche

1. Vorrichtung zum Abtrennen des an Knochen anhaftenden Fleisches von diesen Knochen durch Verpressen der fleischbehafteten Knochen, mit einem in einem Gestell (1) angeordneten, gegen ein Widerlager (43) in dichtende Anlage anhebbaren Preßraum (4) mit vertikaler Achse (5), in den von unten ein Preßkolben (3) einführbar ist und der an seinem oberen Ende durch das Widerlager (43) für die Verpressung verschließbar ist, das zwischen einer über dem Preßraum (4) liegenden Schließ-Stellung und einer den Preßraum (4) freigebenden Stellung um eine vertikale Achse (22) verschwenkbar ist und an seinem dem Preßraum (4) zugewendeten Boden einen Fortsatz trägt (38), der bei der Anhebung des Preßraumes (4) in diesen oben dichtend eintritt, wobei die Wand (8) des Preßraumes (4) Öffnungen (9) für den Durchgang der durch den Preßdruck in pastenartigen Zustand übergeführten Fleischmasse hat, für die Knochen jedoch undurchlässig ist, und seitlich an das obere Ende des Preßraumes (4) eine im wesentlichen horizontale Auflagefläche (15) für die in den Preßraum (4) einzuschiebenden fleischbehafteten Knochen anschließt und oberhalb des Preßraumes (4) ein horizontales Querstück (7) vorgesehen ist, welches während des Preßvorganges den Preßdruck aufnimmt und hiebei an zwei Säulen (23,24) des Gestelles (1) verankert ist, dadurch gekennzeichnet, daß das Widerlager (43) mit dem Querstück (7) und dem Fortsatz (38) zu einem gemeinsam um die von der einen Säule (23) gebildete vertikale Achse (22) verschwenkbaren einstückigen Bauteil vereint ist, und daß zu Zentrierzwecken der Fortsatz (38) mit einer konischen Mantelfläche (42) versehen ist, die zugleich das Widerlager (43) bildet.

2. Vorrichtung nach Anspruch 1, dadurch gekennzeichnet, daß das Querstück (7) nach der Auflagefläche (15) abgewendeten Seite in seine den Preßraum (4) fregebende Stellung verschwenkbar ist.

3. Vorrichtung nach Anspruch 1 oder 2, dadurch gekennzeichnet, daß das Querstück (7) an seinem der vertikalen Achse (22) abgewendeten Ende zu einem Haken (26) geformt ist, und daß dieser Haken (26) eine Ausnehmung (25) der anderen, nicht die Schenkachse bildenden Säule (24) in der den Preßdruck aufnehmenden Stellung umgreift.

## Claims

1. Device for separating the meat adhering to bones from these bones by compressing the meat-laden bones, comprising a compressing chamber (4) with a vertical axis (5) disposed in a frame (1) which can be raised to fit against an abutment (43) to form a seal, into which chamber a press plunger (3) may be introduced from beneath and which chamber may be sealed for the compressing process at its top end by the abutment (43) which can be swivelled about a vertical axis (22) between a closing position located over the compressing chamber (4) and a position freeing the compressing chamber (4) and which bears an extension (38) on its base facing towards the compressing chamber (4) which, when the compressing chamber (4) is raised, enters it at the top to form a seal, wherein the wall (8) of the compressing chamber (4) has openings (9) for the meat material, conveyed in a paste-like state by the compressing pressure, to pass through, but which is impermeable to the bones, and joined laterally to the top end of the compressing chamber (4) is a substantially horizontal supporting surface (15) for the meat-laden bones which are to be pushed into the compressing chamber (4), and provided above the compressing chamber (4) is a horizontal crosspiece (7) which absorbs the compressing pressure during the compressing process and which is in this case anchored to two uprights (23, 24) of the frame (1), characterised in that the abutment (43) is combined with the crosspiece (7) and the extension (38) to form a single-piece component capable of swivelling together about the vertical axis (22) formed by one of the uprights (23), the extension (38) being provided with a conical surface (42).

2. Device according to claim 1, characterised in that the crosspiece (7) may be swivelled towards the side facing away from the support surface (15) into its position freeing the compressing chamber (4).

3. Device according to claim 1 or 2, characterised in that the end, facing away from the vertical axis (22), of the crosspiece (7) is shaped into a hook (26), and in that this hook (26) engages round a recess (25) of the other upright (24) not constituting the swivel axis in the position absorbing the compressing pressure.

## Revendications

1. Dispositif pour détacher la viande adhérant sur des os en comprimant les os chargés de viande, avec une chambre de pression (4) à axe vertical (5), qui est disposée dans un bâti (1), qui peut être levée en application hermétique contre un élément de contre-appui (43), dans laquelle peut être introduite par le bas un piston de pression (3), et qui peut être fermée à son extrémité supérieure, en vue de la compression, par l'élément de contre-appui (43) qui peut être pivoté autour d'un axe vertical (22) entre une position de fermeture située au-dessus de la chambre de pression (4) et une position dégageant la chambre de pression (4) et qui porte sur son fond tourné vers la chambre de pression (4) un prolongement (38) qui pénètre hermétiquement par le haut dans la chambre de pression (4) lors du levage de cette dernière, la paroi (8) de la chambre de pression (4) possédant des ouvertures (9) pour le passage de la masse de viande transformée en un état pâteux par la force de pression, mais ne laissant pas passer les os, une face de support sensiblement horizontale (15), pour les os chargés de viande qui doivent être introduits dans la chambre de pression (4), se raccordant latéralement à l'extrémité supérieure de la chambre de pression (4), et un élément transversal horizontal (7) étant prévu au-dessus de la chambre de pression (4), élément qui reçoit la force de pression pendant le processus de pression et qui est ancré à cet effet sur deux colonnes (23, 24) du bâti (1), caractérisé en ce que l'élément de contre-appui (43) est réuni avec l'élément transversal (7) et le prolongement (38) en un élément constructif en une pièce qui peut être pivoté conjointement autour de l'axe vertical (22) formé par une (23) des colonnes, le prolongement (38) étant doté d'une face d'enveloppe conique (42).

2. Dispositif selon la revendication 1, caractérisé en ce que l'élément transversal (7) peut être pivoté du côté opposé à la face de support (15) dans sa position dégageant la chambre de pression (4).

3. Dispositif selon la revendication 1 ou 2, caractérisé en ce que l'élément transversal (7) est formé en un crochet (26) à son extrémité opposée à l'axe vertical (22), et en ce que ce crochet (26), dans la position recevant la force de pression, s'engage autour d'un évidement (25) de l'autre colonne (24), ne constituant pas l'axe de pivotement.

FIG. 1

FIG. 2

FIG. 3

FIG. 4